# EUROPÄISCHE PATENTSCHRIFT

(11) **EP 0 893 670 B1**
(45) Veröffentlichungstag und Bekanntmachung des Hinweises auf die Patenterteilung: **28.12.2005**
(21) Anmeldenummer: 98113100.6
(22) Anmeldetag: 14.07.1998
(51) Int. Cl.: G01B 11/30, G01B 11/24, G01B 11/16, G01M 17/02

(54) **Reifenprüfvorrichtung**
Tyre testing device
Dispositif de contrôle des pneus

(30) Priorität: 22.07.1997 DE 19731486
(43) Veröffentlichungstag der Anmeldung: 27.01.1999
(73) Patentinhaber: Beissbarth GmbH, 80993 München (DE)
(72) Erfinder: Femböck, Josef, 84523 Neuötting (DE)
(74) Vertreter: Kirschner, Klaus Dieter

(56) Entgegenhaltungen:
- WO-A-96/10727
- DE-A- 4 231 578
- DE-A- 19 515 949

## Beschreibung

Die Erfindung betrifft eine Reifenprüfvorrichtung, mit einer Luftdruckeinrichtung zur Änderung des Reifendrucks eines Rades, mit einem Prüfkopf und einem Rechner, die vor und nach einer Änderung im Luftdruck mit kohärenter Strahlung jeweils ein Interferogramm der Reifenoberfläche erzeugen und das Interferogramm in ein Modulo-2π-Bild umsetzen, das seinerseits zu einem Grauwertbild verarbeitet wird, und in denen aus einem Vergleich der Grauwertbilder die Informationen über vorhandene Defekte des Reifens gewonnen werden, und mit einer Steuereinrichtung, um das Rad um den Betrag eines Prüfsegmentes weiterzudrehen, wenn die Prüfung des vorhergehenden Prüfsegmentes abgeschlossen ist.

Aus der DE 4231578 A1 ist ein Verfahren zur Ermittlung der Strukturfestigkeit von Reifen bekannt, bei dem der Reifen mit kohärentem Licht beleuchtet wird, die vom Reifen zurückgestreute Strahlung in einem Zweistrahlinterferometer in zwei Teilstrahlen aufgeteilt wird, in dem Zweistrahlinterferometer eine der beiden Teilstrahlungen gegen die andere Teilstrahlung verkippt wird (Shearing), in dem Zweistrahlinterferometer eine der beiden Teilstrahlungen schrittweise phasenverschoben wird, die von dem Prüfobjekt zurückgestreute und in dem Zweistrahlinterferometer in die zwei Teilstrahlungen aufgeteilte und wieder zusammengeführte Strahlung durch die Oberfläche des Reifens abbildende Komponenten mit großer Öffnung einem elektronischen Bildsensorsystem zugeführt wird und die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild bestätigt wird.

Gemäß der DE 19502073 A1 wird das vorstehend erwähnte Verfahren dadurch weitergebildet, daß das Ausgangs-Grauwertbild in der Weise partiell differenziert wird, daß ein zweites dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird, und damit ein resultierendes Grauwertbild entsteht, an dem gegebenenfalls vorhandene Defekte eines Reifens erkennbar sind.

Wenn man bedenkt, daß Strukturschäden in den Reifen, insbesondere in der Karkasse einschließlich Gürtel, bei PKW-Reifen die Fahrsicherheit des Kraftfahrzeuges wesentlich beeinträchtigen können, ist es wünschenswert eine Reifenprüfung in regelmäßigen Abständen durchzuführen.

In der Deutschen Patentanmeldung P 197 24 464.5 wird vorgeschlagen, zur Prüfung eines Reifens das Rad, das den zu prüfenden Reifen aufweist, auf einer Wuchtmaschine zu montieren, und ein an der Wuchtmaschine angeordneter Prüfkopf wird zur Aufnahme der Interferogramme an den Reifen bis auf einen vorgegebenen Prüfabstand herangefahren. Auf einem ersten Prüfsegment des Reifens wird die Überprüfung auf Defekte vorgenommen. Dann wird das Rad durch die Wuchtmaschine um den Betrag eines Prüfsegmentes weitergedreht, und die zuletzt genannten Schritte werden wiederholt, bis der gesamte Reifen überprüft ist. Die Reifenprüfvorrichtung weist demnach eine Wuchtmaschine, auf der das Rad, das den zu prüfenden Reifen aufweist, montierbar ist, eine Positionierungseinrichtung für einen Prüfkopf, mit der der Prüfkopf zur Aufnahme der Interferogramme an den Reifen bis auf einen vorgegebenen Prüfabstand heranzufahren ist, und eine Steuereinrichtung für die Wuchtmaschine auf, um das Rad um den Betrag eines Prüfsegmentes weiterzudrehen

In der Deutschen Patentanmeldung P 197 24 463.7 wird vorgeschlagen, zur Prüfung eines Reifens am Kraftfahrzeug mit dem Rad, das den zu prüfenden Reifen aufweist, auf einen antreibbaren Rollensatz zu fahren. Die Reifenprüfvorrichtung weist eine Luftdruckeinrichtung zur Änderung des Reifendrucks sowie einen Prüfkopf und einen Rechner auf. Ferner umfaßt die Vorrichtung wenigstens einen angetriebenen Rollensatz auf den das Kraftfahrzeug mit dem Rad, das den zu prüfenden Reifen aufweist, aufzufahren ist, eine Positionierungseinrichtung für den Prüfkopf, mit der der Prüfkopf zur Aufnahme der Interferogramme an den Reifen bis auf einen vorgegebenen Abstand heranzufahren ist und durch eine . Steuereinrichtung für den Rollensatz, um diesen um den Betrag eines Prüfsegmentes weiterzudrehen, wenn die Prüfung des vorhergehenden Prüfsegmentes abgeschlossen ist.

Der Erfindung liegt die Aufgabe zugrunde, eine Reifenprüfvorrichtung zu schaffen, die eine Reifenprüfung im Rahmen von Wartungsarbeiten an den Rädern eines KfZs oder im Rahmen einer allgemeinen technischen Überprüfung des KfZs gestattet, die von Zeit zu Zeit durchgeführt werden müssen, und dabei sollen die Rechen- und Auswertungsvorgänge möglichst schnell und mit möglichst geringem Bau- und Hardwareaufwand durchgeführt werden können.

Dazu ist die erfindungsgemäße Reifenprüfvorrichtung dadurch gekennzeichnet, daß in dem Prüfkopf eine Optik-Einrichtung zur Erzeugung der Interferogramme, eine elektronische Ansteuerung für die Optik-Einrichtung und die Luftdruck-Steuereinrichtung zusammengefaßt sind und daß in dem Rechner eine Ablaufsteuerung der Reifenprüfvorrichtung und Mittel vorgesehen sind, um die Interferogramme auszuwerten. Durch diese Aufteilung der optischen und elektronischen Einheiten auf dem Prüfkopf und dem Hauptrechner (PC) wird eine schnelle Auswertung bei einem verhältnismäßig geringen Bau- und Hardware-aufwand erreicht.

Nach einer vorteilhaften Ausgestaltung der erfindungsgemäßen Reifenprüfvorrichtung umfaßt der Prüfkopf eine CPU, die elektronische Ansteuerung für die Optik-Einrichtung und die Luftdrucksteuereinrichtung vorgesehen ist und über eine Schnittstelle mit dem Rechner verbunden ist. Damit können alle Funtionen in dem Prüfkopf über nur eine serielle Schnittstelle , beispielsweise eine RS-232-Schnittstelle, mit der Recheneinrichtung (PC) koordiniert werden.

Nach einer weiteren vorteilhaften Ausgestaltung der erfindungsgemäßen Reifenprüfvorrichtung, wobei die Optik-Einrichtung eine Videokamera, Laserdioden und eine Piezoeinrichtung umfaßt, ist dadurch gekennzeichnet, daß die von dem Rechner gesteuerte elektronische Ansteuerung für die Optik-Einrichtung eine Laserdioden-Ansteuereinrichtung und eine Piezoeinrichtung-Ansteuereinrichtung umfaßt.

Eine weitere vorteilhafte Ausgestaltung der Erfindung ist dadurch gekennzeichnet, daß die Luftdruck-Steuereinrichtung einen Druckluftsensor und einen Magnetventiltreiber umfaßt, wobei vorzugsweise das Magnetventil sowohl in Bezug auf seine Größe als auch in Bezug auf seine Öffnungszeit steuerbar ist. Dabei ist ferner vorteilhaft, daß die Luftdruck-Steuereinrichtung den Reifendruck bei jedem Prüfschritt um eine Stufe herabsetzt und nach abgeschlossener Prüfung wieder auf den Nenndruck bringt.

In vorteilhafter Weise wird der Bauaufwand bei der erfindungsgemäßen Reifenprüfung weiter dadurch herabgesetzt, daß ein Netzteil zum Versorgen der elektronischen Einheiten des Prüfkopfes in den Prüfkopf integriert ist.

Eine weitere vorteilhafte Ausgestaltung der Erfindung ist dadurch gekennzeichnet, daß ein Systembus, vorzugsweise eine 1²C-Bus, zum Verbinden der elektronischen Einheiten des Prüfkopfes vorgesehen ist.

Im Hinblick auf die Schnelligkeit des Prüfkopfes ist es vorteilhaft, daß die elektrischen Einheiten des Prüfkopfes auf einer Platine zusammengefaßt sind, die vorzugsweise auch das Netzteil umfaßt.

Eine weitere vorteilhafte Ausgestaltung der Erfindung ist dadurch gekennzeichnet, daß ein Systembus, vorzugsweise eine I²C-Bus, zum Verbinden der CPU mit der Piezzoeinrichtung-Ansteuerungseinnrichtung des Prüfkopfes vorgesehen ist.

Eine weitere vorteilhafte Ausgestaltung der erfindungsgemäßen Reifenprüfvorrichtung, wobei die Radantriebs-Steuereinrichtung einer Wuchtmaschine zum segmentweisen Weiterdrehen des Rades dient, ist dadurch gekennzeichnet, daß der Rechner der Reifenprüfvorrichtung in den Rechner der Wuchtmaschine integriert ist. Mit anderen Worten erfüllt der Rechner sowohl seine Funktion beim Wuchten der Räder als auch bei der Reifenprüfung.

Bei der vorstehend genannten Ausführungsform ist es vorteilhaft, wenn ein Drehmelder mit der Welle der Wuchtmaschine verbunden ist, der die Weiterdrehung der Welle abtastet und an den Rechner gibt, der den Motorantrieb abschaltet, wenn das Rad um ein Prüfsegment weitergedreht ist. Derartige Drehmelder sind bei herkömmlichen Wuchtmaschinen ohnehin vorhanden, so daß auch Bauaufwand gespart wird.

Eine weitere vorteilhafte Ausgestaltung der erfindungsgemäßen Reifenprüfvorrichtung, wobei wenigstens ein angetriebener Rollensatz eines Bremsenprüfstandes, auf dem das Kraftfahrzeug mit dem Rad, das den zu prüfenden Reifen aufweist, aufzufahren ist, zum segmentweisen Weiterdrehen des Rades dient, ist dadurch gekennzeichnet, daß der Rechner der Reifenprüfvorrichtung in den Rechner des Bremsenprüfstandes integriert ist.

Bei der vorgenannten Ausführungsform ist vorteilhaft, wenn eine Tastrolle vorgesehen ist, die die Weiterdrehung des Reifens abtastet und über einen Drehmelder an den Rechner gibt, der den Motorantrieb abschaltet, wenn der Reifen um ein Prüfsegment weitergedreht ist. Damit wird der Rollensatz des Bremsenprüfstandes mit geringstem Aufwand an die Erfordernisse bei der Reifenprüfung adaptiert.

Schließlich ist eine vorteilhafte Ausgestaltung der erfindungsgemäßen Reifenprüfvorrichtung dadurch gekennzeichnet, daß der Motor für das segmentweise Weiterdrehen des Rades über einen Frequenzumrichter betrieben ist, der von dem Rechner steuerbar ist.

Ausführungsbeispiele der Erfindung werden nun anhand der beiliegenden Zeichnungen beschrieben. Es zeigen:
Figur 1 eine schematische Draufsicht auf eine Wuchtmaschine als erstes Ausführungsbeispiel der erfindungsgemäßen Reifenprüfvorrichtung;
Figur 2 eine Frontansicht des Prüfkopfes der Reifenprüfvorrichtung nach Figur 1;
Figur 3 ein schematisches Blockdiagramm der Reifenprüfvorrichtung gemäß dem ersten Ausführungsbeispiel;
Figur 4 eine schematische Draufsicht auf einen Rollensatz eines Bremsenprüfstandes als zweites Ausführungsbeispiel der erfindungsgemäßen Reifenprüfvorrichtung;
Figur 5 eine schematische Frontansicht der Vorrichtung nach Figur 4;
Figur 6 ein schematisches Blockdiagramm der Reifenprüfvorrichtung nach dem zweiten Ausführungsbeispiel;
Figur 7 ein Blockdiagramm der optischen und elektronischen Einheiten eines Prüfkopfes.

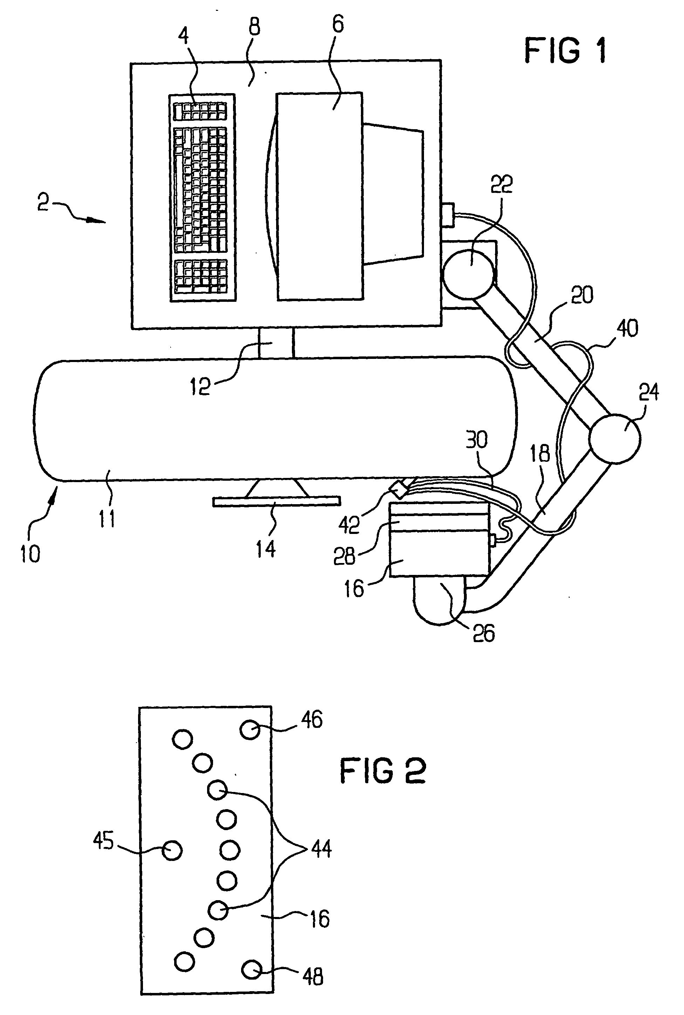

Figur 1 zeigt eine Wuchtmaschine 2 mit einer Tastatur 4 und einem Monitor 6, die auf einem Gehäuse 8 angeordnet sind. Ein Rad 10 mit einem Reifen 11 ist auf einer Welle 12 der Wuchtmaschine 2 durch eine Schnellspannvorrichtung 14 montiert, die an einer Felge 13 (Fig. 2) des Rades 10 angreift.

An dem Gehäuse 8 der Wuchtmaschine 2 ist ein Prüfkopf 16 über zwei Parallelführungen oder Arme 18, 20 befestigt. Der Arm 20 ist an seinem einem Ende auf einer Konsole 22 an dem Gehäuse 8 schwenkbar gelagert. Ein Gelenk 24 verbindet den Arm 20 mit dem Arm 18, und der Arm 18 ist über ein Gelenk 26 an dem Prüfkopf 16 befestigt. Damit kann der Prüfkopf 16 von einer Position (nicht gezeigt), in der er an dem Gehäuse 8 verstaut ist, in eine Prüfposition (Figur 1) geschwenkt werden, in der er der Seitenwand des Reifens 11 in Prüfposition gegenüberliegt. An dem Prüfkopf 16 ist ein Handgriff 28 vorgesehen, der einen Druckschalter (nicht gezeigt) aufweist, über den die Positioniereinrichtung (Parallelführungen oder Arme 18, 20) arretiert werden können, wenn der Prüfkopf 16 die Prüfposition erreicht hat.

Die Luftdruckeinrichtung umfaßt einen Druckschlauch 40 und ein Ventil 42 mit einem Druckluftsensor, wobei das Ventil 42 auf das Einlaßventil des Reifens aufsetzbar ist. In dem Prüfkopf 16 ist eine Steuereinrichtung für die Luftdruckeinrichtung vorgesehen. Die Steuereinrichtung in dem Prüfkopf 16 ist über ein Kabel 30 mit dem Ventil, das als Magnetventil ausgeführt ist, und dem Druckluftsensor verbunden, der in das Ventil integriert ist. Das Ventil 42 ist sowohl bezüglich seiner Öffnung (Abgabemenge pro Zeiteinheit) als auch zum Öffnen und Schließen steuerbar, so daß die Druckänderung im Reifen sowohl über die Ventilöffnung als auch über die Zeitdauer steuerbar ist, in der Ventil geöffnet ist.

Der Prüfkopf 16 ist in Figur 2 in Frontansicht dargestellt, und es sind Laserdioden 44 zu erkennen, die zur Erfassung der Interferogramme dienen. Ferner sind zwei Dioden 46, 48 vorgesehen, die dazu dienen, den Prüfabstand zwischen dem Prüfkopf 16 und der Seitenwand des Reifens 11 einzustellen. Dazu sind die beiden Laserdioden 46, 48 im sichtbaren Bereich derart schräggestellt, daß ihre Laserstrahlen einen Winkel zueinander bilden und sich an der Stelle kreuzen, die dem Prüfabstand zwischen Prüfkopf und Reifenseitenfläche entspricht. Wenn der Prüfkopf 16 zu dem Reifen 11 hin bewegt wird, ist der Prüfabstand dann erreicht, wenn die beiden Laserstrahlen auf der Seitenwand des Reifens 11 einen Punkt bilden. Schließlich ist noch ein Objektiv 45 einer Kamera schematisch dargestellt, die die Bilder von dem zu prüfenden Reifen aufnimmt.

Die Drehzahl des Motors der Wuchtmaschine wird über steuerbar Frequenzumrichter derart gesteuert, daß er eine relativ geringe, konstante Drehzahl aufweist. Ein Drehmelder an der Welle 12 tastet die Welle ab und erzeugt ein Ausgangssignal, welches dem Betrag entspricht, um den der Reifen gedreht worden ist. Das Ausgangssignal des Drehmelders wird in dem Rechner dazu verwendet, um den Antriebsmotor abzuschalten, wenn der Reifen um ein Prüfsegment weitergedreht worden ist. Bei dem in Figur 2 gezeigten Ausführungsbeispiel ist ein Prüfsegment 1/8 des Gesamtumfanges des Reifens, so daß der Reifen siebenmal weitergedreht werden muß, um den Reifen insgesamt zu überprüfen.

Mit dem Prüfkopf 16 sind eine Zuleitung für die Stromversorgung des Prüfkopfes und eine Datenleitung zu der Recheneinheit verbunden. Auch der Motor zum Antrieb der Welle der Wuchtmaschine und der Drehmelder an der Welle der Wuchtmaschine sind mit der Recheneinheit verbunden, wobei diese Verbindungsleitungen und die Recheneinheit zur Vereinfachung nicht dargestellt sind.

Es ist eine zentrale Recheneinrichtung zur Steuerung der Funktionen der Reifenprüfvorrichtung vorgesehen, wobei diese Recheneinrichtung mit dem Rechner der Wuchtmaschine integriert ist, so daß auch hier Hardware-Aufwand eingespart wird. Auch der Monitor zur Anzeige der Meßergebnisse wird für das Wuchten und für die Reifenprüfung gleichermaßen verwendet, indem die Informationen über die beiden Prüfverfahren auf demselben Monitor angezeigt werden.

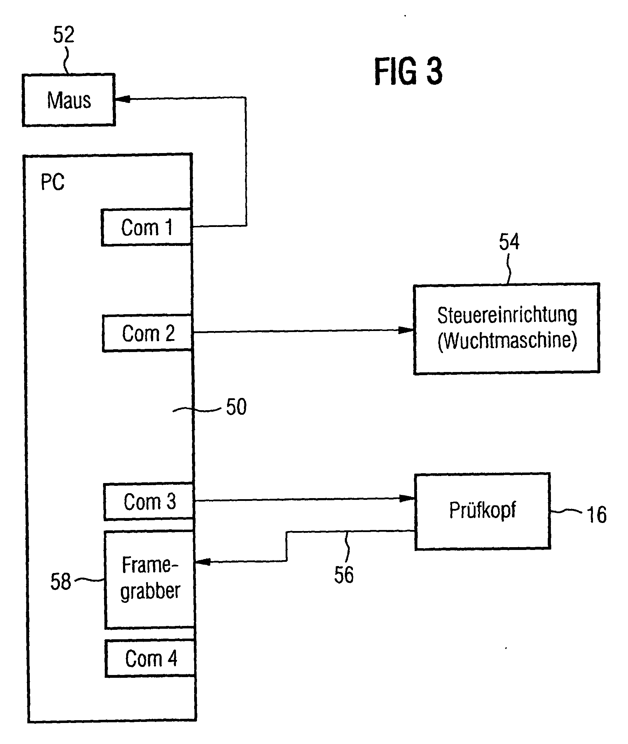

Figur 3 zeigt ein schematisches Blockdiagramm des ersten Ausführungsbeispieles der Reifenprüfvorrichtung. Die zentrale Recheneinheit 50, die als PC dargestellt ist, hat in bekannter Weise mehrere "Com"-Anschlüsse. Eine Maus 52 ist an dem Anschluß Com 1 angeschlossen. An dem Anschluß Com 2 ist eine Wuchtmaschinen-Steuereinrichtung 54 angeschlossen, die im wesentlichen die Motorsteuerung für den Antriebsmotor der Wuchtmaschine umfaßt und auch für das segmentweise Weiterschalten des Rades bei der Reifenprüfung zuständig ist. An dem Anschluß Com 3 ist der Prüfkopf 16 angeschlossen, während die in dem Prüfkopf vorhandene Videokamera über eine Leitung 56 an dem Framegrabber 58 in der Recheneinheit 50 angeschlossen ist. Die Ausführung des Prüfkopfes 16 wird noch im einzelnen beschrieben, während die Anschlüsse für die Tastatur und den Monitor der Recheneinheit 50 zur Vereinfachung weggelassen worden sind.

Die Funktionsweise der Reifenprüfvorrichtung ist wie folgt. Zunächst wird das Rad, das den zu prüfenden Reifen aufweist, auf einer Wuchtmaschine montiert, wobei die Welle der Wuchtmaschine unter der Steuerung eines Rechners sowohl zur Auswuchtung des Rades als auch zur Durchführung der Reifenprüfung mit unterschiedlichen Drehzahlen angetrieben werden können.

Als nächstes wird ein Prüfkopf zur Aufnahme der Interferogramme an den Reifen bis auf einen vorgegebenen Prüfabstand herangefahren und in dieser Position arretiert. Nach der Montage des Reifens an der Wuchtmaschine wird das Luftdruckventil an den Reifen angeschlossen.

Vor der Durchführung der ersten Prüfsequenz werden die radspezifischen Daten beziehungsweise die für die Weiterschaltung der Welle der Wuchtmaschine erforderlichen Größen, beispielsweise die Dauer des Antriebs bei konstanter Drehzahl, die von den Radabmessungen abhängen, in den Rechner eingegeben beziehungsweise von einer Tabelle abgerufen.

Sodann wird die Reifenprüfung auf einem ersten Prüfsegment des Reifens nach dem eingangs genannten Verfahren durchgeführt. Nachdem das erste Prüfsegment überprüft ist, wird das Rad durch die Welle der Wuchtmaschine um den Betrag eines Prüfsegmentes weitergedreht, wobei die Welle der Wuchtmaschine über einen Rechner und in Abhängigkeit von Ausgangssignalen eines Drehmelders an der Welle der Wuchtmaschine gesteuert werden. Wenn das Rad mit den nächsten Prüfsegment in Position gebracht ist, wird der Prüfkopf aktiviert, um das neue Meßsegment zu überprüfen.

Danach werden so viele Prüfsequenzen und Weiterschaltungen der Räder durchgeführt, bis der gesamte Reifen überprüft ist. Bei jeder Prüfsequenz wird, wie bereits erwähnt, zwischen einer ersten Serie von Interferogrammen und einer zweiten Serie eine Druckabsenkung durchgeführt, die ebenfalls von der Recheneinrichtung gesteuert ist. Die Druckabsenkung erfolgt somit in Stufen, wobei der Druck ausgehend vom Nenndruck bei jeder Prüfsequenz um eine Stufe herabgesetzt wird. Nach abgeschlossener Prüfung wird dann der Luftdruck im Reifen wieder auf den Nenndruck gebracht, wobei ebenfalls das Ventil und die angeschlossene Steuereinrichtung benutzt werden.

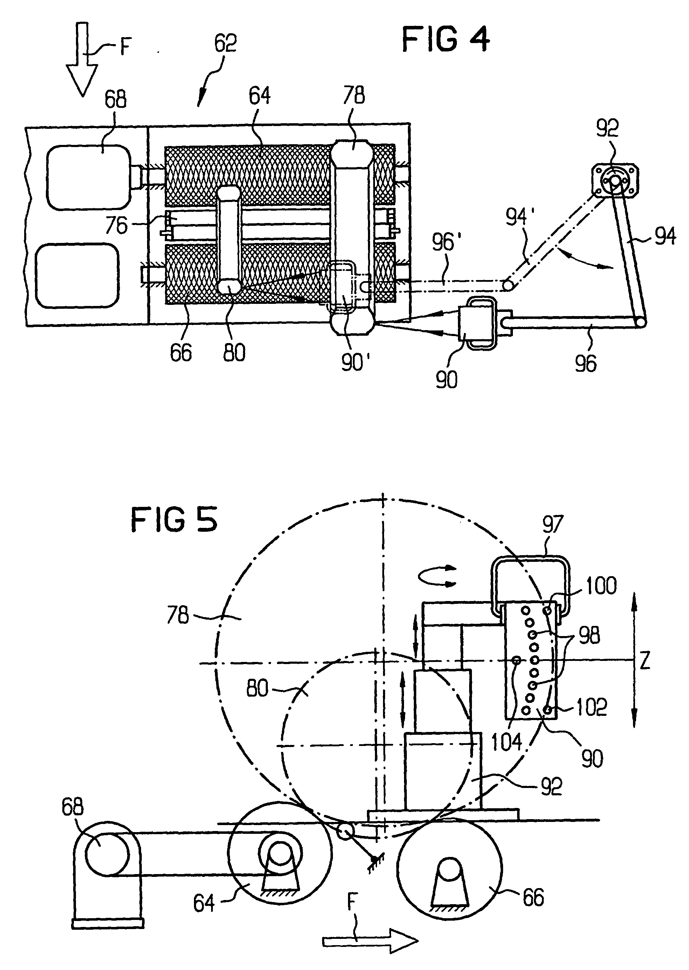

Unter Bezugnahme auf die Figuren 4 bis 6 wird nun ein zweites Ausführungsbeispiel der erfindungsgemäßen Reifenprüfvorrichtung beschrieben. Von einem Bremsenprüfstand 62 ist ein Rollensatz mit zwei Rollen 64, 66 dargestellt, von denen die Rolle 64 von einem Motor 68 angetrieben ist. Die andere Rolle 66 ist freilaufend. Zwischen den Rollen des Rollensatzes ist jeweils eine Tastrolle 76 angeordnet. Die Rollensätze und Antriebsmotoren des Bremsenprüfstandes sind in einer Vertiefung im Boden angeordnet.

Ein Fahrzeug wird in Richtung des Pfeiles F auf die Rollensätze gefahren, so daß beispielsweise seine Vorderräder in den beiden Rollensätzen angeordnet sind. In der Figur 4 ist ein Vorderrad 78 eines Kraftfahrzeuges dargestellt, dessen Reifen geprüft werden sollen. In Figur 4 ist desweiteren ein Vorderrad 80 dargestellt, welches einen kleineren Durchmesser als das Rad 78 hat und zu einem anderen Kraftfahrzeug gehört. Die unterschiedlichen Größen der Räder 78 und 80 dienen lediglich zur Erläuterung der Funktionsweise dieses Ausfiihrungsbeispieles der Erfindung.

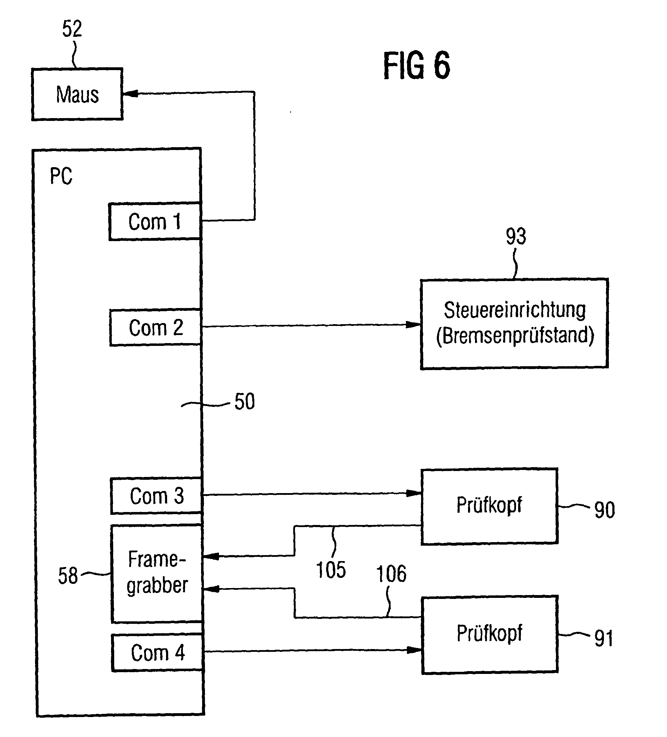

Ein Prüfkopf 90 ist auf einer in Richtung des Pfeiles Z in Figur 5 vertikal bewegbaren Z-Säule 92 über zwei Schwenkarme 94, 96 angebracht. Damit kann der Prüfkopf 90 leicht in die Position gebracht werden, in der der korrekte Prüfabstand zu den Seitenflächen des Reifens 78 eingehalten wird. Dann werden die Schwenkarme 94, 96 sowie die Z-Säule 92 arretiert.

Die Luftdruckeinrichtung umfaßt, wie bei dem ersten Ausführungsbeispiel, einen Druckschlauch und ein Magnetventil, welches auf das Einlaßventil des Reifens aufsetzbar ist. Das Ventil ist sowohl bezüglich seiner Öffnung (Abgabemenge pro Zeiteinheit) als auch zum Öffnen und Schließen steuerbar, so daß die Druckänderung im Reifen sowohl über die Ventilöffnung als auch über die Zeitdauer steuerbar ist, in der Ventil geöffnet ist. Die in dem Prüfkopf 90 angeordnete Luftdruck-Steuereinrichtung ist über ein Kabel (nicht gezeigt) mit dem Druckluftsensor und dem Magnetventil verbunden.

An dem Prüfkopf 90 ist ein Griff 97 vorgesehen, mit dem der Prüfkopf von Hand entlang der drei Achsen bewegt werden kann, bis die Prüfposition erreicht ist. Wenn die Prüfposition erreicht ist, werden die Arretierungseinrichtungen der drei Schlitten über einen Druckschalter aktiviert, der an dem Griff 97 vorgesehen ist.

Der auf der Säule 92 angeordnete Prüfkopf 90 ist in Figur 5 in Frontansicht dargestellt, und es sind Laserdioden 98 zu erkennen, die zur Erfassung der Interferogramme dienen. Ferner sind zwei Dioden 100, 102 vorgesehen, die dazu dienen, den richtigen Abstand zwischen dem Prüfkopf 90 und der Seitenwand des Reifens 78 festzustellen. Dazu sind die beiden Laserdioden 100, 102 im sichtbaren Bereich derart schräggestellt, daß ihre Laserstrahlen einen Winkel zueinander bilden und sich an der Stelle kreuzen, die dem richtigen Abstand zwischen Prüfkopf und Reifenseitenfläche entspricht. Wenn der Prüfkopf 90 zu dem Reifen 78 hin bewegt wird, ist der Prüfabstand dann erreicht, wenn die beiden Laserstrahlen auf der Seitenwand des Reifens 78 einen Punkt bilden. Schließlich ist noch ein Objektiv 104 einer Kamera schematisch dargestellt, die die Bilder von dem zu prüfenden Reifen aufnimmt.

Die Drehzahl des Motors 68 wird über einen steuerbaren Frequenzumrichter (nicht gezeigt) von der zentralen Recheneinheit der Reifenprüfvorrichtung derart gesteuert, daß er eine relativ geringe, konstante Drehzahl aufweisen. Die Tastrolle 76 tastet den Reifen ab, um über Drehmelder ein Ausgangssignal zu erzeugen, welches dem Betrag entspricht, um den der Reifen gedreht worden ist. Das Ausgangssignal der Drehmelder der Tastrolle 76 wird in dem Rechner dazu verwendet, um den Antriebsmotor abzuschalten, wenn der Reifen um ein Prüfsegment weitergedreht worden ist. Bei dem in Figur 5 gezeigten Ausführungsbeispiel ist ein Prüfsegment 1/8 des Gesamtumfanges des Reifens, so daß der Reifen siebenmal weitergedreht werden muß, um den Reifen insgesamt zu überprüfen.

Die Position des Prüfkopfes 90' ist in Phantomlinien und mit den Bezugszeichen 90', 94', 96' dargestellt.

Wie aus Figur 4 ersichtlich ist, kann mit dieser Positionierungseinrichtung der Prüfkopf 90 bis auf den Prüfabstand sowohl bei großen Rädern wie dem Rad 78 als auch bei kleinen Rädern wie dem Rad 80, in Position gebracht werden.

Es ist eine zentrale Recheneinrichtung zur Steuerung der Funktionen der Reifenprüfvorrichtung vorgesehen, wobei diese Recheneinrichtung mit dem Rechner des Bremsenprüfstandes integriert ist, so daß auch hier Hardware-Aufwand eingespart wird. Auch der Monitor zur Anzeige der Meßergebnisse wird für die Bremsenprüfung und für die Reifenprüfung gleichermaßen verwendet, indem die Informationen über die beiden Prüfverfahren auf demselben Monitor angezeigt werden

Die Funktionsweise des oben beschriebenen Ausführungsbeispiels der erfindungsgemäßen Reifenprüfvorrichtung an einem Bremsenprüfstand ist analog zu der Funktionsweise der erfindungsgemäßen Reifenprüfvorrichtung an einer Wuchtmaschine wie oben beschrieben wurde. Der Unterschied besteht darin, daß die beiden Rollensätze eines Bremsenprüfstandes unter der Steuerung des Rechners sowohl zur Durchführung der Bremsenprüfung als auch zur Durchführung der Reifenprüfung mit unterschiedlichen Drehzahlen angetrieben werden können.

Figur 6 zeigt ein schematisches Blockdiagramm des zweiten Ausführungsbeispieles der Reifenprüfvorrichtung. Die zentrale Recheneinheit 50, die als PC dargestellt ist, hat in bekannter Weise mehrere "Com"-Anschlüsse. Eine Maus 52 ist an dem Anschluß Com 1 angeschlossen. An dem Anschluß Com 2 ist eine Bremsenprüfstand-Steuereinrichtung 93 angeschlossen, die im wesentlichen die Motorsteuerung für den Antriebsmotor des Bremsenprüfstandes umfaßt und auch für das segmentweise Weiterschalten des Rades bei der Reifenprüfung zuständig ist. An dem Anschluß Com 3 ist der Prüfkopf 90 angeschlossen, während die in dem Prüfkopf vorhandene Videokamera über eine Leitung 105 an dem Framegrabber 58 in der Recheneinheit 50 angeschlossen ist. Die Ausführung des Prüfkopfes 90 wird noch im einzelnen beschrieben, während die Anschlüsse für die Tastatur und den Monitor der Recheneinheit 50 zur Vereinfachung weggelassen worden sind. Ein zweiter Prüfkopf 91 ist über eine Leitung 106 mit dem Framegrabber 58 verbunden. Bei diesem Ausführungsbeispiel wird der Framegrapper 58 für die Verarbeitung der Ausgangssignale beider Prüfköpfe 90, 91 verwendet.

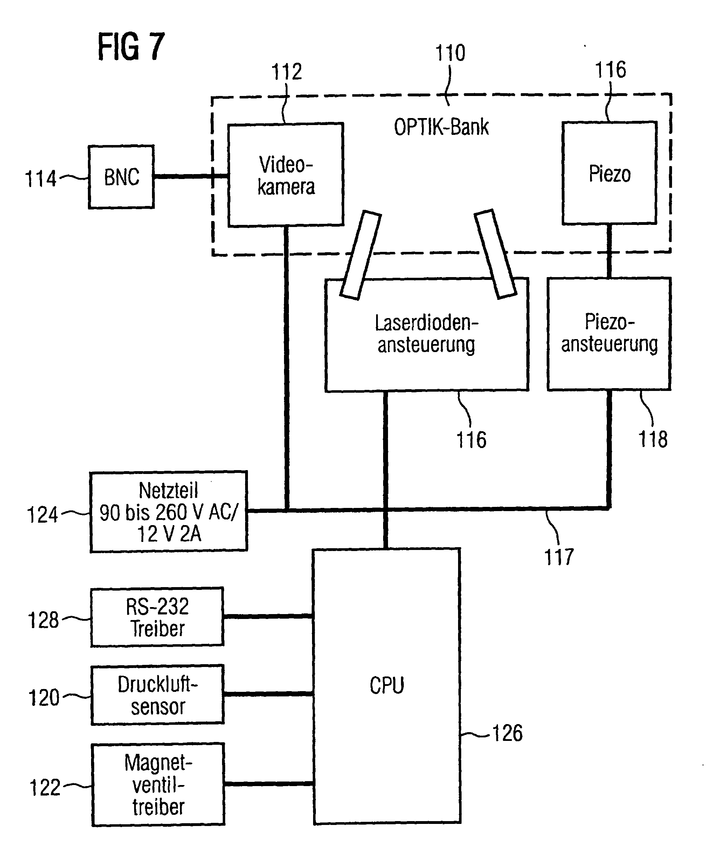

Figur 7 zeigt ein schematisches Blockdiagramm der optischen und elektronischen Einheiten von dem Prüfkopf, beispielsweise von dem Prüfkopf 16 oder 90, 91. In dem Prüfkopf 16 ist eine Optik-Einrichtung 110 zur Erzeugung der Interferogramme vorgesehen, die eine Videokamera 112, die Laserdioden und eine Piezoeinrichtung 116 umfaßt.

In der Optik-Einrichtung wird das von dem Reifen zurückgestreute Licht mit einem Objektiv einer Videokamera erfaßt, wobei das Licht ein Michelson-Interferometer durchläuft, in dem der Lichtstrahl am Strahlteiler zunächst in zwei Teilstrahlen aufgeteilt wird. Die Teilstrahlen werden nach Reflexion an den Spiegeln wieder zusammengeführt, bevor sie zu dem Objektiv der Videokamera 112 gelangen. In dem Michelson-Interferometer kann mit Hilfe eines Stellelementes ein Teilbild relativ zum anderen Teilbild verkippt werden. Man erhält dann zwei gegeneinander verschobene Bilder der Reifenseitenwand. Mit Hilfe eines Piezoelementes kann der zweite Teilstrahl axial in kleinsten Schritten verschoben werden. Diese Funktion dient zur Festlegung der Phasenlage des zurückgestreuten Lichtes und damit zur Verformungsbestimmung. Das Videosignal der Videokamera 112 (CCD-Kamera) wird als Analogsignal über dem BNC-Anschluß 114 (Fig. 7) dem PCI-Framegrapper 58 zugeführt, der in der Recheneinrichtung 50 vorgesehen ist.

Eine elektronische Ansteuerung für die Optik-Einrichtung 110 umfaßt eine Laserdioden-Ansteuereinrichtung 116 und eine Piezo-Ansteuerung 118. Die Luftdruck-Steuereinrichtung umfaßt einen Druckluftsensor 120 und einen Magnetventiltreiber 122. Schließlich ist in Figur 7 ein Netzteil 124 zum Versorgen der elektronischen Einheiten des Prüfkopfes gezeigt. Die elektrischen Einheiten werden von einem Rechner CPU 126 gesteuert, der über einen RS-232-Treiber 128 mit der Recheneinrichtung (PC) 50 verbunden ist, in der eine Ablaufsteuerung der Reifenprüfvorrichtung und Mittel vorgesehen sind, um die Interferogramme auszuwerten.

Jeder der Meßköpfe 16, 90 und 91 arbeitet als autonomes System. Die Steuerung wird über eine serielle Schnittstelle und den RS-232-Treiber 128 von der Recheneinrichtung 50 aus übernommen. Damit sind die Piezoeinrichtung 116 zur Spezialbilderzeugung (Wellenlängenverschiebung), die Laserdioden 44; 98 zum Ausleuchten der Reifenseitenwände, die Laserdioden 46, 48; 100, 102 zum Einrichten des Abstandes der Prüfköpfe von den Reifen, die Videokamera 112 für die Bilderfassung, der Druckluftsensor 120 zur Prüfung des Reifendrukkes, der Magnetventiltreiber 122 für die Steuerung des Magnetventils 42 und eine serielle Schnittstelle über den Treiber 128 anzusteuern. Das System ist so ausgelegt, daß über einen seriellen Systembus 117, vorzugsweise eine 1²C-Bus, die einzelnen Baugruppen über die CPU 126 gesteuert werden. Sicherheitsrelevante Elemente der Reifenprüfvorrichtung, beispielsweise die Bedingung, daß die Ausleuchtungslaserdioden, beispielsweise die Dioden 44, nur dann eingeschaltet werden dürfen, wenn ein Reifen dem Prüfkopf gegenüberliegt, unterliegen so nicht der Kontrolle der Recheneinrichtung 50, da diese Elemente hard- und softwaremäßig unabhängig von der Recheneinrichtung 50 gesichert sind. Durch die serielle Systemarchitektur sind auch problemlos zukünftige Optionen realisierbar. Eine Erweiterung bis auf maximal 128 Baugruppen ist möglich. Beispielsweise sind LCD-Displays, Infrarotfernbedienungselemente, LED-Display-Einrichtungen, Relaisausgänge, Halbleiterausgänge, zusätzliche analoge und digitale Ausgänge sowie Tastenfelder möglich. Durch die Systemarchitektur ist es insbesondere möglich, mit nur einer seriellen Schnittstelle alle Baugruppen im Meßkopf anzusteuern, einschließlich der Druckluftsteuerung.

Jeder Prüfkopf wird über ein handelsübliches Geräteanschlußkabel an die Hauptstromversorgung angeschlossen. Er kann in einem Spannungsbereich von 90 bis 260 V und mit einer Frequenz von 40 bis 400 Hz ohne Umschalter arbeiten. Intern werden nach dem Netzteil 124 alle Baugruppen einschließlich Videokamera 112 und Piezoeinrichtung 116 mit 12 V Gleichspannung gespeist. Das System ist dadurch berührungssicher. Die Hochspannung zur Ansteuerung der Piezoeinrichtung 116 wird in der Piezoeinrichtung-Ansteuerungseinrichtung lokal erzeugt. Die Baugruppen der einzelnen Systemkomponenten sind über ein Flachbandkabel in Bustechnologie, das heißt über den Systembus 117, miteinander verbunden. Die Verkabelung ist dadurch äußerst einfach.

Eine weitere vorteilhafte Ausgestaltung kann dadurch verwirklicht werden, daß das Netzteil 124 und die übrigen Baugruppen 116, 118, 120, 122, 126 und 128 auf einer Platine zusammengefaßt werden, wobei in diesem Fall ein Systembus, vorzugsweise ein T²C-Bus nur noch für Ansteuerung eines Piezoverstärkers in der Ansteuerungseinrichtung 118 für die Piezoeinrichtung vorgesehen ist. Dadurch ergibt sich eine weitere Vereinfachung der erfindungsgemäßen Reifenprüfungsvorrichtung in Bezug auf Bau- und Hardwareaufwand.

## Patentansprüche

1. Reifenprüfvorrichtung mit einer Luftdruck-Steuereinrichtung zur Änderung des Reifendrucks eines Rades, mit einem Prüfkopf und einem Rechner, die vor und nach einer Änderung im Luftdruck mit kohärenter Strahlung jeweils ein Interferogramm der Reifenoberfläche erzeugen und das Interferogramm in ein Modulo-2π-Bild umsetzen, das seinerseits zu einem Grauwertbild verarbeitet wird, wobei aus einem Vergleich der Grauwertbilder die Informationen über vorhandene Defekte des Reifens gewonnen werden, einer Positionierungseinrichtung für den Prüfkopf, mit der der Prüfkopf zur Aufnahme der Interferogramme an den Reifen bis auf einen vorgegebenen Abstand zu positionieren ist, und mit einer Steuereinrichtung, um das Rad um den Betrag eines Prüfsegmentes weiterzudrehen, wenn die Prüfung des vorhergehenden Prüfsegmentes abgeschlossen ist, **dadurch gekennzeichnet, daß**
a) in dem Prüfkopf (16, 90) eine Optik-Einrichtung (110) zur Erzeugung der Interferogramme, eine elektronische Ansteuerung (116, 18) für die Optik-Einrichtung und die Luftdruck-Steuereinrichtung (120, 122) zusammengefaßt sind, und daß
(b) in dem Rechner (50) eine Ablaufsteuerung der Reifenprüfvorrichtung und Mittel vorgesehen sind, um die Interferogramme auszuwerten.

2. Vorrichtung nach Anspruch 1, **dadurch gekennzeichnet, daß** der Prüfkopf (16, 90) eine CPU (126) umfaßt, die für elektronische Ansteuerung für die Optik-Einrichtung und die Luftdrucksteuereinrichtung vorgesehen ist und über eine Schnittstelle (128) mit dem Rechner (50) verbunden ist.

3. Vorrichtung nach Anspruch 1, wobei die Optik-Einrichtung eine Videokamera, Laserdioden und eine Piezoeinrichtung umfaßt, **dadurch gekennzeichnet, daß** die von dem Rechner (50) gesteuerte elektronische Ansteuereinrichtung für die Optik-Einrichtung (110) einer Laserdiodenansteuerungseinrichtung (116) und eine Piezoeinrichtung-Ansteuerungseinrichtung (118) umfaßt.

4. Vorrichtung nach Anspruch 1, **dadurch gekennzeichnet, daß** die Luftdrucksteuer-Einrichtung einen Druckluftsensor (120) und einen Magnetventiltreiber (122) umfaßt.

5. Vorrichtung nach Anspruch 1, **gekennzeichnet durch** ein Ventil (42) das sowohl in Bezug auf die Größe seiner Öffnung als auch in Bezug auf seine Öffnungszeit steuerbar ist.

6. Vorrichtung nach Anspruch 5, **gekennzeichnet durch** eine Luftdruck-Steuereinrichtung (122) zum Steuern des Luftdruckes im Reifen, wobei der Reifendruck bei jedem Prüfschritt um eine Stufe herabzusetzen und nach abgeschlossener Prüfung wieder auf den Nenndruck zu bringen ist.

7. Vorrichtung nach Anspruch 1, **dadurch gekennzeichnet, daß** ein Netzteil (124) zum Vorsorgen der elektronischen Einheiten des Prüfkopfes in dem Prüfkopf integriert ist.

8. Vorrichtung nach einem der Ansprüche 1 bis 7, **dadurch gekennzeichnet, daß** ein Systembus, vorzugsweise eine I²C-Bus, zum Verbinden der elektronischen Einheiten des Prüfkopfes vorgesehen ist.

9. Vorrichtung nach einem der vorhergehenden Ansprüche, **dadurch gekennzeichnet, daß** die elektronischen Einheiten des Prüfkopfes auf einer Platine zusammengefaßt sind, die vorzugsweise auch das Netzteil (124) umfaßt.

10. Vorrichtung nach einem der Ansprüche 3 bis 7 oder 9, **dadurch gekennzeichnet, daß** ein Systembus, vorzugsweise eine I²C-Bus, zum Verbinden der CPU mit der Piezzoeinrichtung-Ansteuerungseinnrichtung des Prüfkopfes vorgesehen ist.

11. Vorrichtung nach Anspruch 1, wobei die Radantriebs-Steuereinrichtung einer Wuchtmaschine zum segmentweisen Weiterdrehen des Rades dient, **dadurch gekennzeichnet, daß** der Rechner der Reifenprüfvorrichtung in den Rechner der Wuchtmaschine integriert ist.

12. Vorrichtung nach Anspruch 11, **dadurch gekennzeichnet, daß** ein Drehmelder mit der Welle der Wuchtmaschine verbunden ist, der die Weiterdrehung der Welle abtastet und an den Rechner gibt, der den Motorantrieb abschaltet, wenn das Rad um ein Prüfsegment weitergedreht ist.

13. Vorrichtung nach Anspruch 1, wobei wenigstens ein angetriebener Rollensatz eines Bremsenprüfstandes, auf den das Kraftfahrzeug mit dem Rad, das den zu prüfenden Reifen aufweist, aufzufahren ist, zum segmentweisen Weiterdrehen des Rades dient, **dadurch gekennzeichnet, daß** der Rechner der Reifenprüfvorrichtung in den Rechner des Bremsenprüfstandes integriert ist.

14. Vorrichtung nach Anspruch 13, **dadurch gekennzeichnet, daß** eine Tastrolle (76) vorgesehen ist, die die Weiterdrehung des Reifens abtastet und über einen Drehmelder an den Rechner gibt, der den Motorantrieb abschaltet, wenn der Reifen um ein Prüfsegment weitergedreht ist.

15. Vorrichtung nach Anspruch 11 oder 13, **dadurch gekennzeichnet, daß** der Motor für das segmentweise Drehen des Rades über einen Frequenzumrichter betrieben ist, der von dem Rechner (50) steuerbar ist.

## Claims

1. A tire testing device comprising an air pressure control means for changing the tire pressure of a wheel, a test head and a computer, which prior to and after a change in the air pressure respectively with coherent radiation produce an interferogram of the tire surface and convert the interferogram into a modulo-2π image, which for its part is processed to yield a gray value image, and in which from a comparison of the gray value images the information about defects present in the tire is obtained, a positioning means for the test head, with which the test head is to be positioned for producing interferograms at a predetermined distance from the tire, and a control means in order to incrementally rotate the wheel by an amount equal to a test segment, when the examination of the preceding test segment is completed,
**characterized in that**
a) an optical means (110) for producing the interferograms, an electronic control means (116,18) for the optical means and the air pressure control means (120,122) are collected together in the test head (16,90) and **in that**
(b) a sequence control means for the tire checking apparatus and means for evaluating the interferogram are provided in the computer (50).

2. Apparatus as claimed in claim 1, **characterized in that** the test head (16,90) comprises a CPU (126) which is provided for the electronic control of the optical means and the air pressure control means and is connected via an interface (128) with the computer (50).

3. Apparatus as claimed in claim 1, wherein the optical means comprises a video camera, laser diodes and a piezo means, **characterized in that** the electronic control means controlled by the computer (50) for the optical means (10) comprises a laser diode control means (116) and an piezo means control means (118).

4. Apparatus as claimed in claim 1, **characterized in that** the air pressure control means includes a pressure sensor (120) and a solenoid valve driver (122).

5. Apparatus as claimed in claim 1, **characterized by** a valve (42) which is controllable both as regards the size of its aperture and as regards the time of opening.

6. Apparatus as claimed in claim 5, **characterized by** air pressure control means (122) to control the pressure in the tire, the tire pressure being reduced for each checking step by one step and after the conclusion of checking being returned to the rated pressure.

7. Apparatus as claimed in claim 1, **characterized in that** a power supply (124) is integrated in the test head for supplying the electronic units of the test head.

8. Apparatus as claimed in any of the claims 1 to 7, **characterized in that** a system bus, preferably an I²C bus, is provided for connecting the electronic units of the test head.

9. Apparatus as claimed in any of the preceding claims, **characterized in that** the electronic units of the test head are mounted together on one board which, preferably, also comprises the power supply (124).

10. Apparatus as claimed in any of the claims 3 to 7 or 9, **characterized in that** a system bus, preferably an I²C bus, is provided for connecting the CPU with the piezo means control means of the test head.

11. Apparatus as claimed in claim 1, wherein the wheel drive control means of a balancing machine serves for segment-wise incremental rotation of the wheel; **characterized in that** the computer of the tire checking apparatus is integrated in the computer of the balancing machine.

12. Apparatus as claimed in claim 11, wherein a synchro is connected with the shaft of the balancing machine, which senses incremental rotation of the balancing machine and feeds rotation information to the computer, which halts further rotation of the motor drive, when the wheel has turned by one check segment.

13. Apparatus as claimed in claim 1, wherein at least one driven roller set of a brake test dynamometer, on which the motor vehicle is to be driven having the wheel, which bears the tire to be checked, serves for segment-wise incremental rotation of the wheel, **characterized in that** the computer of the tire checking apparatus is integrated in the computer of the brake test dynamometer.

14. Apparatus as claimed in claim 13, **characterized in that** a sensor roller (76) which senses the incremental rotation of the tire and via a synchro causes the computer to respond to such rotation, said computer then turning off the motor drive, when the tire has been further through one check segment.

15. Apparatus as claimed in claim 11 or claim 13, wherein the motor for segment-wise rotation of the wheel is operated using a frequency converter, which may be controlled by the computer (50).

## Revendications

1. Dispositif de contrôle des pneus avec un dispositif de commande de la pression de l'air pour la modification de la pression dans le pneu d'une roue, avec une tête de contrôle et un ordinateur, qui avant et après une modification dans la pression de l'air, génère par radiation cohérente vers une interférogramme de la surface du pneu et transforme l'interférogramme dans une image modulo-2, qui à son tour est traitée dans une image à valeurs de tons gris, où par la comparaison des images à valeurs de tons gris, on obtient les informations en ce qui concerne les défauts existants du pneu, avec un dispositif de positionnement pour la tête de contrôle à l'aide duquel la tête de contrôle peut être positionnée jusqu'à une distance préétablie à l'égard du pneu dans la vue de l'enregistrement de l'interférogramme, et avec un dispositif de commande pour la rotation en avant de la roue, avec la valeur d'un segment de contrôle après la terminaison du contrôle du segment de contrôle antérieur, **caractérisé en ce que**,
a) dans la tête de contrôle (16, 90) sont inclus un dispositif optique (110) pour la génération de l'interférogramme, une commande électronique (116, 18) pour le dispositif optique et le dispositif de commande de la pression de l'air (120, 122), et que
b) dans l'ordinateur (50) sont pourvus un mécanisme de commande procès du dispositif de contrôle des pneus et des moyens pour évaluer l'interférogramme.

2. Dispositif selon la revendication 1, **caractérisé en ce que**, la tête de contrôle (16, 90) comprend une CPU (126) pourvue pour la commande électronique du dispositif optique et du dispositif de commande de la pression de l'air et qui est couplée avec l'ordinateur (50) par l'intermédiaire d'une interface (128).

3. Dispositif selon la revendication 1, où le dispositif optique comprend une caméra vidéo, des diodes à laser et un dispositif piézo-électrique, **caractérisé en ce que**, le dispositif électronique de commande du dispositif optique (110), qui est commandé par l'ordinateur (50), comprend un dispositif de commande pour les diodes à laser (116) et un dispositif de commande pour le dispositif piézo-électrique (118).

4. Dispositif selon la revendication 1, **caractérisé en ce que**, le dispositif de commande de la pression de l'air comprend un senseur de pression (120) et un circuit de commande pour la valve magnétique (122).

5. Dispositif selon la revendication 1, **caractérisé par** une valve (42) qui peut être commandée tant en ce qui concerne la grandeur de son ouverture qu'en ce qui concerne sa durée d'ouverture.

6. Dispositif selon la revendication 5, **caractérisé en ce que**, un dispositif de commande de la pression de l'air (122) pour la commande de la pression dans le pneu, où la pression dans le pneu peut être réduite avec à raison d'une étape à chaque étape de contrôle et après la fin du contrôle peut être amenée de nouveau à la pression nominale.

7. Dispositif selon la revendication 1, **caractérisé en ce que**, une élément de réseau (124) pour la préparation des unités électroniques de la tête de contrôle est intégrée dans la tête de contrôle.

8. Dispositif selon l'une des revendications 1 à 7, **caractérisé en ce que**, pour la correction des unités électroniques de la tête de contrôle est pourvu un bus de système, de préférence un bus I²C.

9. Dispositif selon l'une des revendications antérieures, **caractérisé en ce que**, les unités électroniques de la tête de contrôle sont groupées sur une plaque, qui de préférence comprend aussi l'élément de réseau (124).

10. Dispositif selon l'une des revendications 3 à 7 ou 9, **caractérisé en ce que**, pour la connexion de la CPU avec le dispositif de commande pour le dispositif piézo-électrique de la tête de contrôle, est pourvu un bus de système, de préférence un bus I²C.

11. Dispositif selon la revendication 1, où le dispositif de commande pour l'entraînement de la roue, d'une machine à équilibrer, sert à la rotation en avant sur segments de la roue, **caractérisé en ce que**, l'ordinateur du dispositif de contrôle des pneus est intégré dans l'ordinateur de la machine à équilibrer.

12. Dispositif selon la revendication 11, **caractérisé en ce qu'**avec l'arbre de la machine à équilibrer est couplé un signaleur de rotation, qui saisit la rotation en avant de l'arbre et la signale à l'ordinateur qui interrompe le système d'entraînement du moteur si la roue est tournée en avant avec un segment de contrôle.

13. Dispositif selon la revendication 1, où pour la rotation en avant sur segments de la roue, sert au moins un jeu de rouleaux, entraînés en rotation d'un freinomètre, sur lequel doit être montée l'automobile avec la roue qui présente le pneu qui va être contrôlée, **caractérisé en ce que**, l'ordinateur du dispositif de contrôle des pneus, est intégré dans l'ordinateur du freinomètre.

14. Dispositif selon la revendication 13, **caractérisé en ce qu'**on pourvoit un rouleau détecteur (76) qui saisit la rotation en avant du pneu et par l'intermédiaire d'un signaleur de rotations le signale à l'ordinateur, qui interrompe le système d'entraînement du moteur si le pneu est tourné en avant avec un segment de contrôle.

15. Dispositif selon la revendication 13 ou 15, **caractérisé en ce que**, pour la rotation en avant sur segments de la roue, le moteur est actionné par l'intermédiaire d'un compensateur de fréquence qui peut être commandé par l'ordinateur (50).
